Europäisches Patentamt

(19) European Patent Office     (11) Publication number:     **0 116 376**
**B1**

Office européen des brevets

(12)     **EUROPEAN PATENT SPECIFICATION**

(45) Date of publication of patent specification: **30.07.86**     (51) Int. Cl.⁴: **B 65 B 5/10,** B 65 G 57/04

(21) Application number: **84200029.1**

(22) Date of filing: **10.01.84**

(54) **Device for arranging objects supplied in a single layer in at least two layers in a delivery station.**

(30) Priority: **11.02.83 NL 8300526**

(43) Date of publication of application:
**22.08.84 Bulletin 84/34**

(45) Publication of the grant of the patent:
**30.07.86 Bulletin 86/31**

(84) Designated Contracting States:
**AT BE CH DE FR GB IT LI LU NL SE**

(56) References cited:
**DE-A-2 633 853**
**FR-A-2 334 891**
**FR-A-2 370 664**
**US-A-2 833 426**
**US-A-3 955 688**

(73) Proprietor: **Scheer Holding B.V.**
**Arie de Waalstraat 49**
**NL-1272 CB Huizen (NL)**

(72) Inventor: **Scheer, Paul Erik**
**No. 49, Arie de Waalstraat 49**
**NL-1272 CB Huizen (NH) (NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage (NL)**

Courier Press, Leamington Spa, England.

# Description

The invention relates to a device for arranging objects, supplied in a single layer by a transport device to a receiving station, in at least two layers in a delivery station, said device comprising a frame, a member picking up the objects, connected with said frame and being movable along a track between the receiving station and the delivery station, driving means for moving the pick-up member along the track and setting means for individually setting the releasing positions of the pick-up member corresponding to the various layers.

Such a device is known, in which the driving means comprise two cam discs and the setting means comprise one cam disc. The transmission from the cam discs to the pick-up member is relatively complicated. In operation many elements perform reciprocatory movements. Due to reactive forces adversely affecting a quiet run and increasing drastically with an increasing working rate, the speed of operation of the known device is quite limited.

The object of the invention is to provide a device of the kind set fourth in the preamble which allows a high working rate with a quiet run.

In the device embodying the invention this is achieved by providing the driving means with an elongate, flexible element, for example, a belt or a chain connected with the pick-up member and being guided in a reciprocating manner along a mainly closed path partly coinciding with the track of movement of guide elements, for example, guide wheels rigidly secured to the frame, whilst the setting means comprise two reversing members, for example, guide wheels rigidly secured to an auxiliary frame displaceable in a setting direction with respect to the frame and displacing means for the auxiliary frame, two opposite parts of the elongate, flexible element being guided in the setting direction opposite to one another by half a turn each about one of the reversing members and whilst the driving means comprise furthermore a moving device engaging the elongate, flexible element on the side of the reversing members remote from the pick-up member. In this way the reciprocating masses producing the reactive forces are mainly limited to those of the pick-up member. Therefore, the working rate may be chosen to be appreciably higher than that of the known device.

In a preferred embodiment of the invention the elongate, flexible element is formed by a toothed belt. Such a belt has a small mass and is free of maintenance.

In order to obtain the desired movement of the elongate, flexible element and hence of the pick-up member, the moving device of a preferred embodiment of the invention comprises a rotatable driving shaft driven by an electric motor and journalled in the frame and being coupled through a connecting rod engaging a crank of said shaft with a crank pin connected with a driving wheel engaging the flexible element, the eccentricity of the crank pin exceeding that of the crank shaft. The reciprocatory movement of the flexible element and hence of the pick-up member takes place with a very uniform acceleration so that the accelerations involved remain as low as possible.

The auxiliary frame can be slidably journalled in the frame. According to the invention the auxiliary frame may be supported by a plurality of parallel supporting legs of equal lengths and pivotally connected with the auxiliary frame and the main frame. Such a support is free of maintenance and insensitive to dirt, which is advantageous for such a device.

In order to obtain synchronous operations of the driving means and the displacing means the displacing means in an advantageous embodiment of the invention comprise a cam disc coupled with the crank shaft through a transmission having a ratio equal to the reciprocal value of the number of layers to be provided in the delivery station, said disc being engaged by an element connected with the auxiliary frame. Since the auxiliary frame only needs carry out movements of the order of magnitude of half the distance between the layers in the delivery station, the resulting accelerations and the reactive forces produced are negligible.

In order to enable the pick-up member to put the objects in an arbitrary number of layers in the delivery station the transmission is, in accordance with the invention, changeable and the cam disc is exchangeable.

Preferably the cam disc is divisible along a diametral plane. The transmission may be formed in known manner by two groups of gear wheels, whilst a chain or a toothed belt is passed around a desired pair of opposite gear wheels.

The device is particularly suitable for working lumps of sugar.

The invention will be described more fully hereinafter with reference to an embodiment shown in the Figures.

Fig. 1 is a fragmentary, simplified, perspective view of a device embodying the invention.

Fig. 2 is a side view of a detail of the device of Fig. 1.

Fig. 3 is a schematic, functional sectional view of the device of Fig. 1 taken on the line II—II in Fig. 1.

Fig. 4 schematically illustrates the operation of the setting device.

The device 1 serves to put objects supplied by a transport device 11 in a single layer to a receiving station 2 in at least two layers in a delivery station 3. The objects are in this case lumps of sugar 5, which are supplied in a single layer by the transport device 11 and which have to be packed in boxes, for example, the box 4. The lumps of sugar are packed in the device described here in three layers in the box 4.

The device 1 comprises a frame 6 having two side plates 7 and 8.

The transport device 11 comprises a conveyor belt 16, an end roller 15 of which is journalled between the plates 7 and 8. The receiving station 2 is located at the end of the conveyor belt 16, whereas the delivery station 3 is located in front of the end thereof. The lumps of sugar supplied at intervals are moved into contact with one another to form a group 19 by guides 22. The operation of these guides 22 is known in the art and does not form part of the present application so that an extensive description is dispensed with. The lumps of sugar 5 collected in a group 10 exactly fit in the box 4. The group 10 of lumps of sugar are picked up by the pick-up member 9. The pick-up member 9 can operate in known manner by vacuum. The pick-up member 9 has a suction connection 23 communicating through a flexible duct with a suction ventilator. By the suction the sugar lumps in the group 10 are sucked against the underside of the pick-up member 9. Then the pick-up member 9 is moved from the receiving station 2 towards the delivery station 3, the group 10 of sugar lumps being carried along. At the arrival at the station 3 the suction is removed so that the sugar lumps are deposited in the box 4.

In order to enable the movement from the receiving station 2 towards the delivery station 3 the pick-up member 9 is connected with a shaft 18, which is adapted to move along a desired track through slots formed in the frame plates 7 and 8. The shaft 18 of the pick-up member 9 is connected for this purpose with a toothed belt 19 of the driving means 20. The operation of the driving means will be described more fully hereinafter.

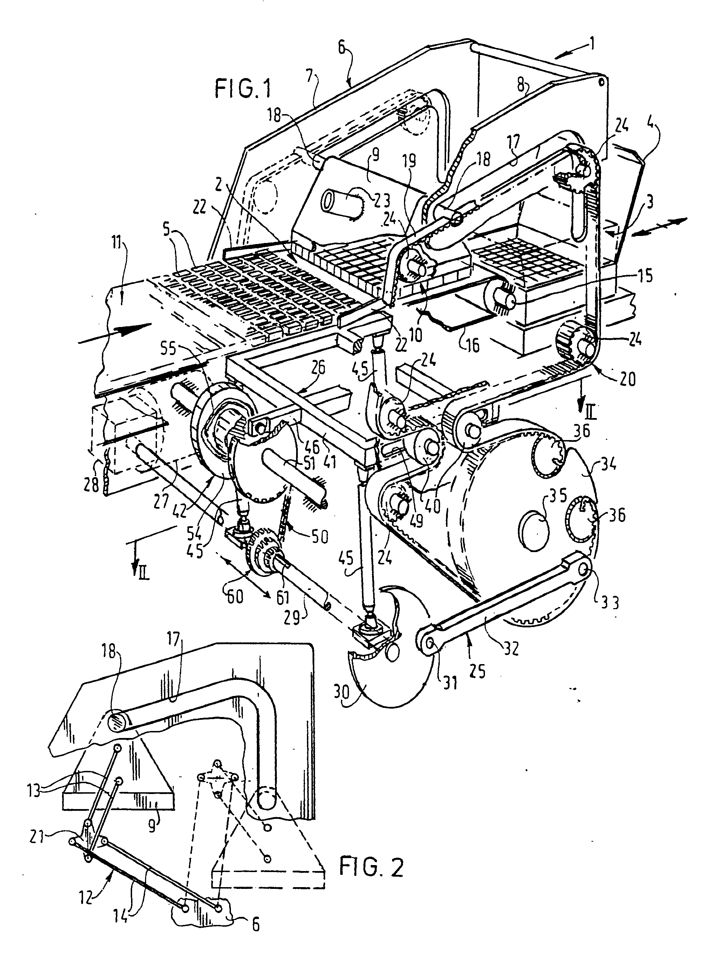

As is schematically shown in Fig. 2 the pick-up member 9 is continuously held in the same position by a double parallelogram guide 12. The double parallelogram guide 12 comprises two arms 13 pivotally connected on the one hand with a side face of the pick-up member 9 and on the other hand with a cross-shaped piece 21. The pivotal joints of the arms 13 are positioned so that they constitute the corners of a parallelogram. In a similar manner two arms 14 are connected on the one hand with the frame 6 and on the other hand with the cross-like piece 21. During the movement of the shaft 18 of the pick-up member 9 from the receiving station towards the delivery station 3 the pick-up member 9 remains in the same state in any position. Fig. 2 shows by solid lines the position of the pick-up member 9 in the receiving station 2, whereas the broken lines indicate the position of the pick-up member 9 in the delivery station 3.

For the sake of clarity Fig. 1 does not show the double parallelogram guide.

In an embodiment not shown the arms 13, 14 may have adjustable lengths. This may be achieved by slidably clamping them at the fulcra. Owing to this adjustability a controlled turn of the pick-up member 9 about the shaft 18 during movement between the receiving station 2 and the delivery station 3 can be obtained instead of the above-described parallel guiding of the pick-up member between said stations. In this embodiment the picked-up objects may be deposited in a container arranged in an inclined position in the delivery station.

As stated above, the movements of the pick-up member 9 between the receiving station 2 and the delivery station 3 are performed with the aid of the driving means 20. In the embodiment shown the driving means 20 comprise a toothed belt 19, which is guided along a substantially closed path partly coinciding with the path of movement of the shaft 18 determined by the slot 17 by guide elements in the form of gear wheels 24 rigidly secured to the frame. The ends of the toothed belt 19 are fastened to a driving wheel 34 journalled on a shaft 35 below in the frame 6. The ends of the toothed belt 19 are fixed to the driving wheel 34 with the aid of clamping rollers 36. The toothed belt also passes around two reversing members 40 forming part of the displacing means by which are set the delivery positions of the pick-up member 9 corresponding with the various layers in the box 4. The mode of operation of the displacing means will be described in detail hereinafter.

The driving means for the toothed belt comprise an electric motor 27 connected with the frame 6 and driving through an orthogonal transmission 28 a driving shaft 29 journalled in the frame 6. At the end of the driving shaft located near the driving wheel 34 is mounted a crank disc 30 having a crank pin 31. The driving wheel 34 also has a crank pin 33. The crank pins 31 and 33 are coupled with one another by a connecting rod 32. The construction is proportioned so that the eccentricity of the crank pin 31 is smaller than that of the crank pin 33. It is thus ensured that during the rotation of the crank disc 30 the driving wheel 34 is rotated in a reciprocating manner. This results in that the toothed belt 19 reciprocates and hence the pick-up member 9 reciprocates between the receiving station 2 and the delivery station 3.

It will be obvious that during the rotation of the driving motor 27 and hence the rotation of the driving shaft 29 the driving wheel 34 continuously performs the same reciprocatory stroke, that is to say, the belt 19 is constantly reciprocated along the same distance. In order to enable stacking up a number of layers of sugar lumps in the box 4, the position of the pick-up member 9 in the delivery station 3 at the end of the stroke of the toothed belt 19 has to be varied in accordance with the position of the layer to be deposited. This means, when three layers have to be deposited in the box 4, the pick-up member 9 has to attain such a delivering position for the first layer that the sugar lumps are substantially in contact with the bottom of the box 4, whereas the delivering position for the second and the third layers has to be once and twice respectively the height of a sugar lump above the former.

These different final positions of the pick-up member 9 with a constant stroke of the driving wheel 34 are obtained with the aid of the setting means 26.

The setting means 26 comprise the above-mentioned reversing members 40 formed by guide rollers. The reversing members 40 are rigidly secured to an auxiliary frame 41, which can be moved with respect to the frame 6 in a setting direction. In the embodiment shown said setting direction is horizontal. Two opposite parts of the toothed belt are guided in this horizontal setting direction opposite to one another by half a stroke each around one of the reversing members 40. By displacing the reversing members 40 in the setting direction in this construction the length of the path determined by the fixed gear wheels 24 and the reversing rollers 40 for the toothed belt 19 does not change so that the stretched state of the toothed belt remains the same. When the driving wheel 34 stands still the part of the toothed belt 19 located on the side of the driving wheel 34 remote from said reversing members will shift in its direction of length over a distance equal to twice the distance covered by the reversing members 40, when the reversing members 40 are displaced in the setting direction. The setting of the various delivering positions of the pick-up member 9 is based on the fact that with a constant stroke of the driving wheel 34 the various final positions are obtained by the displacement of the reversing members 40 in the setting direction. It is, therefore, necessary for the moving device 25 formed by the crank/connecting rod transmission to engage the toothed belt 19 on the side remote from the pick-up member 9 with respect to the reversing member 40.

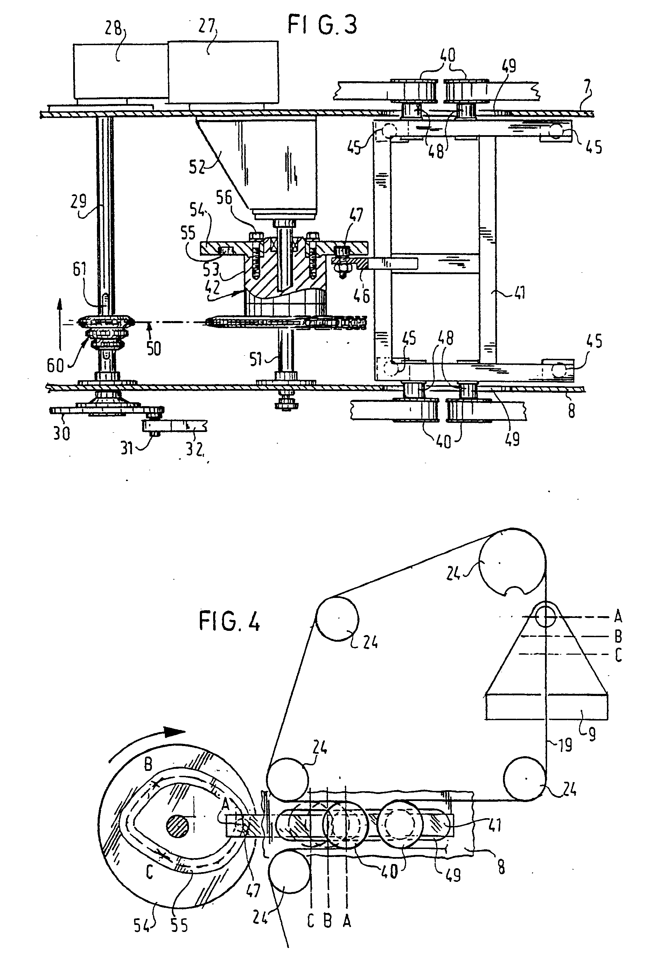

The displacing means 42 for the reversing members 40 used in the device 1 embodying the invention are described in detail with reference to Figs. 3 and 4.

The auxiliary frame 41 is supported in the frame by a plurality of parallel supporting legs 45 of the same length pivotally connected with the frame 6 and the auxiliary frame 41. The length of the supporting legs 45 is large with respect to the movements to be performed by the auxiliary frame 41 in the setting direction so that these movements, on approximation, are linear. The reversing members 40 are connected with the auxiliary frame 41 by shafts 48 extending in slots 49 in the frame plates 7 and 8 respectively. The auxiliary frame 41 has fastened to it an extension arm 46 carrying a cam roller 47 at its end. This cam roller 47 engages a recessed cam 55 of a cam disc 54. The cam disc 54 is connected by bolts 56 with a hub 53 seated on a shaft 51. The shaft 51 is mounted in the frame 6 with the aid of a support 52.

For the sake of clarity Fig. 3 shows the driving shaft 29 at the side of the shaft 51 rather than above the same, which is the case in practice as will be seen from Fig. 1.

The cam disc 54 is driven by the driving shaft 29 through a transmission 50. The ratio of this transmission is equal to the reciprocal value of the number of layers to be deposited in the delivery station 3. Consequently in this embodiment in which three layers of sugar lumps are deposited in the box 4 said ratio is 1:3. This means that for three revolutions of the driving shaft 29 the cam disc 54 performs one revolution.

Owing to the mechanic coupling of the displacing means 42 with the moving device 25 of the driving means 20 for the pick-up member 9 perfect synchronism is obtained between the movements of the pick-up member 9 and those of the setting means.

In an embodiment not shown the displacing means may comprise a step motor ensuring the desired displacement of the reversing members 40. The step motor can displace the auxiliary frame 41 by means of a crank/connecting rod mechanism in a manner self-explanatory for those skilled in the art. Instead of using a crank/connecting rod mechanism other structural solutions may be employed, for example, a screw spindle rotatably driven by the step motor for engaging a nut connected with the auxiliary frame 41.

Fig. 4 schematically shows the three different situations A, B and C in the three delivering positions of the pick-up member 9. The position C corresponds to the deposition of the first layer of sugar lumps, the position B to that of the second layer and position A to that of the third layer. Consequently the pick-up member 9 performs three movements between the receiving station 2 and the delivery station 3 against one revolution of the cam disc 54. The recessed cam 55 in the cam disc is shaped so that each time midway between the positions A, B and C the setting means are in the same position. This is necessary because in this situation the pick-up member 9 is located in the receiving station 2, where it must each time have the same end position since the sugar lumps 5 are continuously supplied at the same level by the transport device 11. This intermediate position preferably corresponds with one of the positions A, B or C. In this way the number of displacements is minimized. At the curve shown in Fig. 4 the intermediate positions correspond to the position B.

In order to permit of using the device as well for depositing a different number of layers of objects in the delivery station 3 the transmission 50 is adjustable and the cam disc 54 is exchangeable. The transmission 50, in this case a chain transmission, comprises a group of gear wheels 60, which is slidably connected with the shaft 29 by means of a key 61 without being rotatably connected. By putting the chain of the transmission 50 on a different gear wheel of the group 60, a different transmission can be obtained, for example with a ratio of 1:4 or 1:5 for depositing four or five layers respectively in the box. When the device 1 is set to a different number of layers, the cam disc 54 is exchanged. For facilitating the exchange the cam disc is divisible along a diametral plane.

In order to ensure the desired perfect synchronism between the driving shaft 29 and the shaft 51 a stretching device (not shown) acts on the chain 50 to keep the transmission free of play. This stretching device comprises two stretching rollers acting equally on the two opposite straight chain parts. Preferably these stretching rollers are coupled with a single control-member in a self-explanatory manner so that the rollers are set in the same manner by a single manipulation. By compensating for the play of the transmission equally distributed in the two straight chain parts the gear wheels maintain the same angular relationship independently of wear and hence of the amount of play of the transmission.

In the device 1 shown the reversing members 40 are arranged one behind the other in the setting direction. However, these reversing members 40 may be in arbitrary relative positions. It is only of importance that the toothed belt should each time run in the setting direction towards and away from the reversing member 40 concerned. In this way it is ensured that the overall length of the path covered by the toothed belt remains the same.

Instead of using a toothed belt, a chain may be employed. A toothed belt has, however, the advantage of a more silent run and a smaller mass.

The transmission 50 of the driving shaft 29 to the cam disc 54 may comprise two fixed groups of gear wheels rather than one displaceable group of gear wheels.

In the foregoing description the manner in which the boxes 4 are supplied to and conducted away from the delivery station 3 is not discussed. Various solutions are possible among which a vertical turret of known type is one of the most suitable solutions.

## Claims

1. A device (1) for placing objects (5), supplied in a single layer by a transport device (11) to a receiving station (2), in at least two layers in a delivery station (3), said device comprising a frame (6), a pick-up member (9) for the objects (5) adapted to move along a path of movement between the receiving station (2) and the delivery station (3) and being connected with said frame (6), driving means (20) for moving the pick-up member (9) along the path of movement and setting means (26) for individually setting the delivering positions of the pick-up member (9) corresponding to the various layers characterized in that the driving means (20) comprise an elongate, flexible element (19), for example, a belt or a chain connected with the pick-up member (9) and being guided in a reciprocating manner along a substantially closed path partly coinciding with the path of movement of guide elements (24) such as guide wheels rigidly secured to the frame (6), in that the setting means (26) comprise two reversing members (40) such as guide wheels, rigidly secured to an auxiliary frame (41) displaceable with respect to the frame (6) in the setting direction and displacing means (42) for the auxiliary frame (41), whilst two opposite parts of the elongate, flexible element (19) are guided, in the setting direction opposite to one another, by half a turn each around one of the reversing members (40) and in that the driving means (20) furthermore comprise a moving device (25) engaging the elongate, flexible element (19) on the other side remote from the pick-up member (9) with respect to the reversing members (40).

2. A device as claimed in claim 1 characterized in that the elongated, flexible element is a toothed belt (19).

3. A device as claimed in claim 1 or 2 characterized in that the moving device (25) comprises a driving shaft (29) rotatably driven by an electric motor (27) and being journalled in the frame (6) and being coupled through a connecting rod (32) engaging a crank (31) of said shaft with a crank pin (33), which is connected with a driving wheel (34) being in engagement with the flexible element (19), the eccentricity of the crank pin (33) exceeding that of the crank shaft (29, 31).

4. A device as claimed in anyone of the preceding claims characterized in that the auxiliary frame (41) is supported by a plurality of parallel supporting legs (45) of equal lengths pivotally connected with the frame (6) and the auxiliary frame (41).

5. A device as claimed in claim 3 or 4 characterized in that the displacing means (42) comprise a cam disc (54) coupled with the crank shaft through a transmission (50) having a ratio equal to the reciprocal value of the number of layers, said cam disc (54) being engaged by an element (47) connected with the auxiliary frame.

6. A device as claimed in claim 5 characterized in that the transmission (50) is changeable and the cam disc (54) is exchangeable.

7. A device as claimed in claim 6 characterized in that the cam disc (54) is divisible along a diametral plane.

8. A device as claimed in claim 3 or 4 characterized in that the displacing means (42) comprise a step motor.

9. A device as claimed in anyone of the preceding claims characterized in that it is adapted to work objects in the form of lumps of sugar.

## Patentansprüche

1. Vorrichtung (1) zur Anordnung von durch eine Transporteinrichtung (11) in einer einzigen Schicht einer Aufnahmestation (2) zugeführten Gegenständen (5) in wenigstens zwei Schichten an einer Abgabestation (3), wobei die Vorrichtung einen Rahmen (6), einen Aufnehmer (9) für die Gegenstände (5) zur Bewegung längs eines Bewegungspfades zwischen der Aufnahmestation (2) und der Abgabestation (3), verbunden mit dem Rahmen (6), einen Antrieb (20) zur Bewegung des Aufnehmers (9) längs des Bewegungspfades und eine Einstelleinrichtung (26) aufweist, um individuell die Abgabestellungen des Aufnehmers (9) entsprechend den verschiedenen Schichten einzustellen, dadurch gekennzeichnet, daß der Antrieb (20) ein langgestrecktes flexibles Element (19), beispielsweise einen Riemen oder eine Kette, aufweist, die mit dem Aufnehmer (9) verbunden und hin- und hergehend längs eines im wesentlichen geschlossenen Pfades geführt ist, der teilweise mit dem Bewegungspfad von Führungselementen (24), beispielsweise Führungsrädern, übereinstimmt, die starr am Rahmen (6) gelagert sind, daß die Einstellmittel (26) zwei Umkehrglieder (40), beispielsweise in Gestalt von Führungsrollen, aufweisen, die starr an einem Hilfsrahmen (41) gelagert sind, der gegenüber dem Rahmen (6) in Einstellrichtung versetzbar ist, daß Einstellmittel (42) für den Hilfsrahmen (41) vorgesehen sind, wobei zwei entgegengesetzte Teile des langgestreckten flexiblen Elementes (19) in Einstellrichtung gegenüberliegend um eine halbe Drehung jeweils um eines der Umlenkglieder (40) geführt sind, und daß der Antrieb (20) außerdem eine Bewegungseinrichtung (25) aufweist, die an dem langgestreckten flexiblen Element (19) auf der anderen Seite angreift, die gegenüber den Umlenkmitteln (40) von Aufnehmer (9) entfernt liegt.

2. Vorrichtung nach Anspruch 1, dadurch gekennzeichnet, daß das langgestreckte flexible Element ein Zahnriemen (19) ist.

3. Vorrichtung nach Anspruch 1 oder 2, dadurch gekennzeichnet, daß die Bewegungsvorrichtung (25) eine Antriebswelle (29) aufweist, die von einem Elektromotor (27) gedreht wird und im Rahmen (6) gelagert ist und über eine Verbindungsstange (32), die an einer Kurbel (31) der Welle angreift, mit einem Kurbelzapfen (33) gekuppelt ist, der mit einem Antriebsrad (34) verbunden ist, das mit dem flexiblen Element (19) in Eingriff steht, wobei die Exzentrizität des Kurbelzapfens (33) diejenige der Kurbelwelle (29, 31) übersteigt.

4. Vorrichtung nach einem der vorhergehenden Ansprüche, dadurch gekennzeichnet, daß der Hilfsrahmen (41) von mehreren parallelen Tragarmen (45) abgestützt ist, die eine gleiche Länge besitzen und schwenkbar mit dem Rahmen (6) und dem Hilfsrahmen (41) verbunden sind.

5. Vorrichtung nach den Ansprüchen 3 oder 4, dadurch gekennzeichnet, daß die Versetzungseinrichtung (42) eine Nockenscheibe (54) aufweist, die mit der Kurbelwelle über ein Getriebe (50) verbunden ist, dessen Übersetzungsverhältnis gleich ist dem Reziprokwert der Zahl der Schichten, wobei die Nockenscheibe (54) von einem Element (47) erfaßt ist, das mit dem Hilfsrahmen verbunden ist.

6. Vorrichtung nach Anspruch 5, dadurch gekennzeichnet, daß das Getriebe (50) einstellbar ist und daß die Nockenscheibe (54) austauschbar ist.

7. Vorrichtung nach Anspruch 6, dadurch gekennzeichnet, daß die Nockenscheibe (54) längs einer diametralen Ebene geteilt ist.

8. Vorrichtung nach Anspruch 3 oder 4, dadurch gekennzeichnet, daß die Versetzungseinrichtung (42) einen Schrittmotor aufweist.

9. Vorrichtung nach einem der vorhergehenden Ansprüche, dadurch gekennzeichnet, daß sie zur Ablage von Zuckerstücken dient.

## Revendications

1. Dispositif (1) destiné à disposer des objets (5), acheminés en une seule couche par un dispositif transporteur (11), à un poste récepteur (2), en au moins deux couches dans un poste de déchargement (3), ledit dispositif comprenant un bâti (6); un organe preneur (9) destiné à prendre les objets (5) et adapté pour se déplacer sur une trajectoire entre le poste récepteur (2) et le poste de déchargement (3) et étant relié audit bâti (6); des moyens d'entraînement (20) servant à déplacer l'organe preneur (9) le long de la trajectoire, et des moyens de réglage (26) destinés à régler individuellement les positions de déchargement de l'organe preneur (9) qui correspondent aux différentes couches, caractérisé en ce que les moyens d'entraînement (20) comprennent un élément allongé, flexible (19), par exemple, une courroie ou une chaîne, relié à l'organe preneur (9), et guidé en mouvement alternatif le long d'un trajectoire sensiblement fermée, qui coïncide en partie avec la trajectoire du mouvement d'éléments de guidage (24), tels que des roues de guidage fixées rigidement au bâti (6), en ce que les moyens de réglage (26) comprennent deux éléments de renvoi (40), tels que des roues de guidage, qui sont fixées rigidement à un bâti auxiliaire (41) qui peut se déplacer par rapport au bâti (6) dans la direction du réglage, et des moyens de déplacement (42) attaquant le bâti auxiliaire (41), tandis que deux parties opposées d'un élément allongé, flexible, (19) sont guidées dans la direction du réglage, l'une en sens inverse de l'autre, d'un demi-tour chacune, autour de l'un des éléments de renvoi (40), et en ce que les moyens d'entraînement (20) comprennent en outre un dispositif moteur (25) qui attaque l'élément allongé, flexible, (19) sur le côté des éléments de renvoi (40) qui est le plus éloigné de l'organe preneur (9).

2. Dispositif selon la revendication 1, caractérisé en ce que l'élément allongé, flexible, est une courroie crantée (19).

3. Dispositif selon la revendication 1 ou la revendication 2, caractérisé en ce que le dispositif (25) comprend un arbre d'entraînement (29) entraîné en rotation par un moteur électrique (27) et qui est tourillonné dans le bâti (6) et couplé, par une bielle (32) coopérant avec une manivelle (31) dudit arbre, à un bouton de manivelle (33), qui est lui-même relié à une roue d'entraînement (34) en prise avec l'élément flexible (19), l'excentricité du bouton de manivelle (33) excédant celle de l'arbre manivelle (29, 31).

4. Dispositif selon l'une quelconque des revendications précédentes, caractérisé en ce que la bâti auxiliaire (41) est supporté par une pluralité de pieds supports parallèles (45) de même longueur, qui sont articulés sur le bâti (6) et sur le bâti auxiliaire (41).

5. Dispositif selon la revendication 3 ou la revendication 4, caractérisé en ce que les moyens de déplacement (42) comprennent un disque de came (54) accouplé à l'arbre manivelle par l'intermédiaire d'une transmission (50), qui possède un rapport égal à l'inverse du nombre des couches, ledit disque de came (54) étant attaqué par un élément (47) relié au bâti auxiliaire.

6. Dispositif selon la revendication 5, caractérisé en ce que la transmission (50) est réglable et que le disque de came (54) est interchangeable.

7. Dispositif selon la revendication 6, caractérisé en ce que le disque de came (54) peut être divisé selon un plan diamétral.

8. Dispositif selon la revendication 3 ou la revendication 4, caractérisé en ce que les moyens de déplacement (42) comprennent un moteur pas-à-pas.

9. Dispositif selon l'une quelconque des revendications précédentes, caractérisé en ce qu'il est adapté pour traiter des objets en forme de morceaux de sucre.

FIG.1

FIG. 2

## FIG. 3

## FIG. 4